# EUROPEAN PATENT APPLICATION

(11) **EP 2 085 923 A1**
(43) Date of publication of application: **05.08.2009**
(21) Application number: 08102959.7
(22) Date of filing: 27.03.2008
(51) Int. Cl.: G06Q 30/00

(54) **Systems and methods for auctioning wireless device assets and providing wireless devices with an asset allocation option**

(30) Priority: 01.02.2008 US 24875
(71) Applicant: Qualcomm Incorporated, San Diego, CA 92121-1714 (US)
(72) Inventor: Jain, Nikhil, 400050, Mumbai (IN); Jacobs, Paul E, La Jolla California CA 92037 (US)
(74) Representative: Copp, David Christopher

(57) **Abstract**

An auction bidding system is provided. The system allows media content providers, such as advertisers, to define bidding constraints for a targeted audience and bid on wireless device assets, such as wireless device memory, application, ringtone, wallpaper and the like, if a biddable wireless device asset is defined. Additionally, the system provides to wireless device users with an option to participate in the allocation of their respective wireless device assets, such as memory, application, ringtone, wallpaper and the like and define conditions, such as content type, time period, and the like, which is to be met in order for the allocation of the wireless device asset to occur. In one or more aspects, wireless device users may be compensated in some form based on their willingness to opt-in to the asset allocation plan.

## Description

### Field

The described aspects relate to wireless communication, and more particularly, to methods, systems and apparatus for auctioning wireless device assets and associated methods, systems and apparatus for providing a wireless device user an option to designate wireless device assets as auctionable.

### Background

Wireless communication networks have been designed to deliver media content to recipients. For example, wireless communication networks may comprise a broadcast or multicast system, which transmit information to multiple recipients at the same time. In addition to delivering broadcast programming, these types of media distribution systems may be suited for delivering advertising media content, otherwise referred to as advertisements or ads, to wireless communication devices, such as cellular telephones and the like.

Advertisers may desire to present their respective advertising media content to specific target audiences. For example, being able to provide their advertising to a targeted audience provides the advertisers more value and overall benefit than just providing random advertising to the overall wireless device population. This is value that the advertisers are more than willing to pay for in terms of increased advertising cost.

From the service provider standpoint, the service provider may have access to a large demographic of wireless devices and the ability to provide media content and, specifically, advertising, to these wireless devices through broadcast/multicast media content distribution and the like. While the service providers may be capable of providing advertisers with useful information, such as user profile information and the like, which may be used to define a target advertising audience, the service providers are unable to define the value of the targeted advertising, in terms of deciding what price to charge the advertiser for the targeted advertisements. This valuation problem becomes heightened when two or more advertisers desire the same target audience simultaneously. In the wireless network model, this problem is exasperated due to the transitory nature of the wireless devices. For example, in the instance in which the target audience is spectators at a sporting event, the target audience is fleeting and, in some instances may be impromptu.

From the wireless device user perspective, the user may, if given the option, choose not to participate in the acquisition of certain types of media content and, in particular, advertising content. The problem from the user perspective is two-fold, the user may not want to allocate valuable and limited wireless device storage capacity for advertising content, and the user may not want to be burdened with being interrupted with unnecessary advertising content. These problems may be mitigated by limiting the amount and type of advertising that is delivered and stored at the wireless device to advertising content that is relevant and topical to the wireless device user. While targeted advertising at the advertiser level may serve to limit the type of advertisements that a user may receive, it does not always assure that the advertisements are relevant to the user and/or timely. This is because traditional targeted advertising at the advertiser level is based on user assumptions, e.g. the advertiser's assumption that a specific age group and/or gender will characteristically have interest in certain advertisements. It does not necessarily take into account specific interests of the individual users nor does it account for the current needs of the user. For example, if a wireless device user currently has a need to purchase a specific product, the advertiser has no insight into a user's dynamic purchasing needs in order to tailor, on-demand, the advertisements that are delivered to this particular user.

Additionally, media content and, specifically, advertising on wireless devices has been limited to audio, video, or multimedia content that is presented in conjunction with a program or application. For example, an advertisement may be presented at certain predetermined intervals within a broadcast or multicast program, similar to how commercials are presented on commercial television broadcasts. Additionally, banners may be defined within certain applications or services that allow for visual or multimedia content to be presented on a rotating basis. However, wireless devices have other means, referred to herein as wireless device assets, which provide for media content storage and/or presentation. As such, these other wireless device assets may be targeted by media content providers, such as advertisers, who desire alternative means for advertising. From the network provider standpoint, such wireless device assets may demand a premium in terms of advertising rates. However, in many instances, these other wireless devices assets are not used as platforms for advertising and, therefore, the wireless device user may be opposed to granting access to these wireless device assets.

Therefore, a need exists to develop a comprehensive system that provides for targeted media content distribution and, in particular, targeted advertisement distribution. Such a system should allow media content providers the ability to target the delivery of their media content to only those wireless devices and/or wireless device users that meet their defined delivery criteria, otherwise referred to herein as bidding constraints. Additionally, the desired system should allow the media content providers to place a value on their targeted bidding constraints, such that the media content providers only pay an advertising rate that is in agreement with the value they place on the targeted bidding constraints. Also, the desired system should provide the media content provider access to alternative wireless device assets, which are not used as platforms for presenting media content. From the service provider's perspective, the desired system should allow for multiple advertisers desiring to provide media content (e.g., advertisements) to the same target group for the same time period to dictate the delivery price. Additionally, from the wireless device user perspective, the desired system should allow for the user to dictate whether to receive the content, what type of content to receive, and the wireless device assets that are available for such content.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented *infra.*

Thus, present aspects provide systems, methods and apparatus for media content distribution and, more particularly, a bidding system implemented by media content service providers that allows media content providers, such as advertisers, to define bidding constraints for a targeted audience and to bid on wireless device assets, if two or more media content providers desire access to the wireless device asset, and have defined one or more of the same bidding constraints. Additionally, the system providers for wireless device users to be provided with an option to participate in the allocation of their respective wireless device assets and define conditions, such as content type, time period, and the like, which is to be met in order for the allocation of the wireless device asset to occur. In one or more aspects, wireless device users may be compensated in some form based on the users' willingness to opt-in to the asset allocation plan.

The described aspects provide media content providers the ability to target the delivery of their media content to only those wireless devices and/or wireless device users that meet their defined delivery criteria, otherwise referred to herein as bidding constraints. Additionally, the bidding system allows the media content providers to place a value on and define the content delivery rate (i.e., duration and frequency of delivery) they are willing to pay for the targeted wireless device asset (i.e., the wireless device asset that the media content provider desires to acquire access to) and their defined bidding constraints. Additionally, the aspects herein disclosed allow the media content providers to acquire alternative wireless device assets, which are then used as platforms for the presentation of the media content provider's media content, such as advertisements.

Additionally, the described aspects allow the device user to choose whether the user desires to participate in the allocation of user's wireless device assets and define conditions that are associated with the allocation, such that allocation of the defined wireless device assets may only occur if the conditions are met. In addition, some aspects provide for the wireless device user to be compensated for the user's willingness to opt-in/participate in the allocation of wireless devices assets.

According to one aspect, a method for auctioning a wireless device asset is defined. The method includes receiving, from a plurality of media content providers, an asset acquisition request identifying at least one wireless device asset and at least one bidding constraint associated with each wireless device asset and determining a biddable wireless device asset based on two or more asset acquisition requests identifying an equivalent wireless device asset and at least one match of a bidding constraint associated with the equivalent wireless device asset. Thus, the biddable wireless device asset includes the equivalent wireless device asset and the matched bidding constraint. The method further includes receiving a bid for the biddable wireless device asset from at least one of the two or more media content providers, determining a winning media content provider for the biddable wireless device asset based on a predetermined allocation routine applied to each bid and storing the biddable wireless device asset as an allocated wireless device asset associated with the winning media content provider for a predetermined period of time.

The selected wireless device asset may include any wireless device asset that is suitable for presenting or accommodating content, such as advertising content or the like. The one or more biddable constraints may include the location of a wireless device, a time period, user profile information, user usage information and the like. For example, the user profile information may include an age range, a gender, an income range, an address range, or the like.

In one aspect of the method, determining a winning media content provider for the biddable wireless device asset based on a predetermined allocation routine applied to each bid further includes optimizing each bid over a predetermined period of time to determine which bid is a winning wireless device asset bid. Optimization may provide for maximization an allocation rate for a predetermined time period.

Alternate aspects of the method may include providing each bidder automated feedback related to an outcome of a bid process. The automated feedback may include an actual success rate that is defined as the ratio between wireless devices assets allocated to a media content provider versus the wireless device assets attempted to be procured by the media content provider. Additionally, the automated feedback information may include one or more simulated success rates that are defined as the ratio between wireless device assets potentially allocated to a media content provider versus the wireless device assets attempted to be procured by the media content provider based on one or more predefined potential bid amounts.

Additionally, the method may include providing the media content providers a network platform, such as an Internet web site or the like, to initiate the asset acquisition request and/or to bid on the biddable wireless device asset. Also, the method may include authorizing the winning wireless device asset bidder to provide media content, such as advertising content or the like, for the allocated wireless device asset.

In some aspects the method may additionally include providing an allocation option to a plurality of wireless devices to participate in an allocation of one or more of the wireless device assets. The allocation option may provide for compensating at a rate proportional to the one or more winning wireless device asset bids for the wireless device's allocated wireless device assets or compensating at a rate proportional to the quantity of conditions identified, if the one or more conditions are met and a winning wireless device asset bid is related to each condition. In the aspects in which an allocation option is provided, the method may additionally include receiving a participation indication from one or more wireless devices indicating a designation of at least one available wireless device asset as a wireless device asset to be allocated. The participation indication may include one or more conditions related to allocation of the at least one available wireless device asset, wherein the one or more conditions is to be met to trigger the allocation of the respective wireless device asset.

A related aspect is provided for by at least one processor configured to auction a wireless device asset. The at least one processor includes a first module for receiving, from a plurality of media content providers, an asset acquisition request identifying at least one wireless device asset and at least one bidding constraint associated with each wireless device asset and a second module for determining a biddable wireless device asset based on two or more asset acquisition requests identifying an equivalent wireless device asset and at least one match of a bidding constraint associated with the equivalent wireless device asset. Thus, the biddable wireless device asset includes the equivalent wireless device asset and the matched bidding constraint. The processor(s) also includes a third module for receiving a bid for the biddable wireless device asset from at least one of the two or more media content providers, a fourth module for determining a winning media content provider for the biddable wireless device asset based on a predetermined allocation routine applied to each bid and a fifth module for storing the biddable wireless device asset as an allocated wireless device asset associated with the winning media content provider for a predetermined period of time.

A further related aspect is defined by a computer program product that includes a computer-readable medium. The medium includes at least one instruction for causing a computer to receive, from a plurality of media content providers, an asset acquisition request identifying at least one wireless device asset and at least one bidding constraint associated with each wireless device asset and at least one instruction for causing the computer to determine a biddable wireless device asset based on two or more asset acquisition requests identifying an equivalent wireless device asset and at least one match of a bidding constraint associated with the equivalent wireless device asset. Thus, the biddable wireless device asset includes the equivalent wireless device asset and the matched bidding constraint. The medium additionally includes at least one instruction for causing the computer to receive a bid for the biddable wireless device asset from at least one of the two or more media content providers, at least one instruction for causing the computer to determine a winning media content provider for the biddable wireless device asset based on a predetermined allocation routine applied to each bid and at least one instruction for causing the computer to store the biddable wireless device asset as an allocated wireless device asset associated with the winning media content provider for a predetermined period of time.

Yet another related aspect is provided for by an apparatus. The apparatus includes means for receiving, from a plurality of media content providers, an asset acquisition request identifying at least one wireless device asset and at least one bidding constraint associated with each wireless device asset and means for determining a biddable wireless device asset based on two or more asset acquisition requests identifying an equivalent wireless device asset and at least one match of a bidding constraint associated with the equivalent wireless device asset. The biddable wireless device asset includes the equivalent wireless device asset and the matched bidding constraint. The apparatus additionally includes means for receiving a bid for the biddable wireless device asset from at least one of the two or more media content providers, means for determining a winning media content provider for the biddable wireless device asset based on a predetermined allocation routine applied to each bid and means for storing the biddable wireless device asset as an allocated wireless device asset associated with the winning media content provider for a predetermined period of time.

A network device for auctioning wireless device assets defines a further aspect. The network device includes a computer platform including at least one processor and a memory. The network device also includes an asset auction module stored in the memory and executable by the at least one processor. The asset auction module includes an asset acquisition request receiver operable to receive, from a plurality of media content providers, an asset acquisition request identifying at least one wireless device asset and at least one bidding constraint associated with each wireless device asset and a biddable wireless device asset determiner operable to determine a biddable wireless device asset based on two or more asset acquisition requests identifying an equivalent wireless device asset and at least one match of a bidding constraint associated with the equivalent wireless device asset. The biddable wireless device asset includes the equivalent wireless device asset and the matched bidding constraint. The asset auction module also includes a bid receiver operable to receive a biddable wireless device asset bid from at least one of the two or more wireless device procurers, an allocation routine operable to determine a winning media content provider for the biddable wireless device asset based on application of the routine to each bid and an allocation asset storage operable to store the biddable wireless device asset as an allocated wireless device asset associated with the winning media content provider for a predetermined period of time.

The network device may additionally include a network platform module stored in the memory and executable by the processor. The network platform module is operable to provide the media content providers a network platform to initiate the asset acquisition request and provide the media content providers a network platform to bid on the biddable wireless device asset.

The one or more biddable constraints may include the location of a wireless device, a time period, user profile information, user usage information and the like. For example, the user profile information may include an age range, a gender, an income range, an address range, or the like.

In some aspects, the network device may include an asset auction feedback operable to provide automated feedback related to an outcome of a bid process. In this regards, the asset auction feedback module may be operable to provide an actual success rate that is defined as the ratio between wireless device assets allocated to a media content provider and the wireless device assets attempted to be procured by the media content provider and/or one or more simulated success rates that are defined as the ratio between wireless device assets potentially allocated to an media content provider versus the wireless device assets attempted to be procured based on one or more predefined potential bid amounts.

In other aspects of the network device, the asset auction module may include an asset authorizer operable to authorize the winning media content provider to provide media content, such as advertising media content, for the allocated wireless device asset.

In certain aspects, the network device may include an asset allocation option module stored in the memory and executable by the at least one processor. In such aspects, the asset allocation option module may be operable to provide an allocation option to a plurality of wireless devices to participate in the allocation of one or more of the wireless device assets. The allocation option may provide for compensation at a rate proportional to the one or more winning wireless device asset bids for the wireless device's allocated wireless device assets. Additionally, the asset allocation option module may provide for the identification of one or more conditions related to the allocation of the wireless device asset, wherein the one or more conditions is to be met to trigger allocation of the wireless device asset. In such aspects, the compensation rate may be proportional to a quantity of conditions identified, if the one or more conditions are met and a winning wireless device asset bid is related to one or more conditions.

A further aspect is defined by a method for providing an asset allocation option to a wireless device user. The method includes providing an allocation option, to a plurality of wireless devices, to participate in the allocation of one or more wireless device assets, wherein the option allows for the identification of one or more conditions as a preface to the allocation of at least one of the wireless device assets, receiving an acceptance of the allocation option including identification of at least one wireless device asset to be allocated and initiating compensation if the identified wireless device asset is allocated. The acceptance of the compensable option may include at least one condition associated with at least one identified wireless device asset as a preface to the allocation of the at least one identified wireless device asset.

The one or more conditions that may be identified as a preface to the allocation of the wireless device assets may include, but are not limited to, a type of content, a time period for allocation of a wireless device asset, a location for allocation of a wireless device asset and the like.

In some aspects of the method initiating compensation if the identified wireless device asset is allocated further comprises initiating compensation at a rate proportional to one or more winning wireless device asset bids for one or more of the allocated wireless device assets or, alternatively, initiating compensation at a rate proportional to a quantity of conditions identified.

A related aspect is provided for by at least one processor configured to provide an asset allocation option to a wireless device. The at least one processor includes a first module for providing an allocation option, to a plurality of wireless devices, to participate in the allocation of one or more wireless device assets, wherein the option allows for the identification of one or more conditions as a preface to the allocation of at least one of the wireless device assets, a second module for receiving an acceptance of the allocation option including identification of at least one wireless device asset to be allocated and a third module for initiating compensation if the identified wireless device asset is allocated.

Another related aspect is defined by a computer program product. The computer-readable medium includes at least one instruction for causing a computer to provide an allocation option, to a plurality of wireless devices, to participate in the allocation of one or more wireless device assets, wherein the option allows for the identification of one or more conditions as a preface to the allocation of at least one of the wireless device assets, at least one instruction for causing the computer to receive an acceptance of the allocation option including identification of at least one wireless device asset to be allocated and at least one instruction for causing the computer to initiate compensation if the identified wireless device asset is allocated.

Yet another related aspect is defined by an apparatus. The apparatus includes means for providing an allocation option, to a plurality of wireless devices, to participate in the allocation of one or more wireless device assets, wherein the option allows for the identification of one or more conditions as a preface to the allocation of at least one of the wireless device assets, means for receiving an acceptance of the allocation option including identification of at least one wireless device asset to be allocated and means for initiating compensation if the identified wireless device asset is allocated.

A network device for providing an asset allocation option to a wireless device defines yet another aspect. The network device includes a computer platform including at least one processor, a memory and an asset allocation option module stored in the memory and executable by the at least one processor. The asset allocation option module includes an allocation option provider operable to provide an allocation option, to a plurality of wireless devices, to participate in the allocation of one or more wireless device assets, wherein the option allows for the identification of one or more conditions as a preface to the allocation of the wireless device assets, an option acceptance receiver operable to receive acceptance of the compensable option including identification of at least one wireless device asset to be allocated, and an compensation initiator operable to initiate compensation if the identified wireless device asset is allocated.

The one or more bidding constraints may include the location of a wireless device, a time period, user profile information, user usage information and the like. For example, the user profile information may include an age range, a gender, an income range, an address range, or the like.

In certain aspects of the network device, the option acceptance receiver is further operable to receive acceptance of the allocation option including at least one condition associated with at least one identified wireless device asset as a preface to the allocation of the at least one identified wireless device asset. Additionally, the compensation initiator is further operable to compensate at a rate proportional to one or more winning asset bids for the allocated wireless device assets or, alternatively, at a rate proportional to a quantity of conditions identified.

A system for auctioning wireless device assets and providing an asset allocation option to a wireless device additionally defines another aspect. The system includes at least one network device that includes a computer platform including at least one processor and a memory. The network device includes an asset auction module stored in the memory and executable by the at least one processor. The asset auction module includes an asset acquisition request receiver operable to receive, from a plurality of media content providers, an asset acquisition request identifying at least one wireless device asset and at least one bidding constraint associated with each wireless device asset and a biddable wireless device asset determiner operable to determine a biddable wireless device asset based on two or more asset acquisition requests identifying an equivalent wireless device asset and at least one match of a bidding constraint associated with the equivalent wireless device asset. Thus, the biddable wireless device asset includes the equivalent wireless device asset and the matched bidding constraint. The asset auction module additionally includes a bid receiver operable to receive a biddable wireless device asset bid from at least one of the two or more wireless device procurers, an allocation routine operable to determine a winning media content provider for the biddable wireless device asset based on application of the routine to each bid, and an allocation asset storage operable to store the biddable wireless device asset as an allocated wireless device asset associated with the winning media content provider for a predetermined period of time.

The network device of the system additionally includes an asset allocation option module stored in the memory and executable by the at least one processor. The asset allocation option module includes an allocation option provider operable to provide an allocation option, to a plurality of wireless devices, to participate in the allocation of one or more wireless device assets, wherein the option allows for the identification of one or more conditions as a preface to the allocation of the wireless device assets, an option acceptance receiver operable to receive acceptance of the compensable option including identification of at least one wireless device asset to be allocated, and a compensation initiator operable to initiate compensation if the identified wireless device asset is allocated.

Thus, present aspects provide systems, methods and apparatus for media content distribution and, more particularly, a bidding system that allows media content providers, such as advertisers, to define bidding constraints for a targeted audience and to bid on wireless device assets, if a biddable wireless device asset is defined. A biddable wireless device asset is defined if two or more content providers (i.e., advertisers) desire access to the same wireless device asset and have defined one or more of the same bidding constraints for the wireless device asset. Additionally, the system providers for wireless device users to be provided with an option to participate in the allocation of their respective wireless device assets and define conditions, such as content type, time period, and the like, which is to be met in order for the allocation of the wireless device asset to occur. In many aspects, wireless device users may be compensated in some form based on their willingness to opt-in to the asset allocation plan.

### BRIEF DESCRIPTION OF THE DRAWINGS

The disclosed aspects will hereinafter be described in conjunction with the appended drawings, provided to illustrate and not to limit the disclosed aspects, wherein like designations denote the elements, and in which:

Fig. 1 is a schematic diagram of a system for auctioning wireless device assets and providing wireless devices with an asset allocation option, according to an aspect;

Fig. 2 is a block diagram of a system for auctioning wireless device assets and providing wireless devices with an asset allocation option, according to an aspect;

Fig. 3 is a schematic diagram providing an example of the procedure for determining a biddable wireless device asset, according to another aspect;

Fig. 4 is a schematic diagram providing an example of the optimization bids over a predetermined time interval, according to another aspect;

Fig. 5 is a block diagram of a network device operable for providing a bidding system to media content providers, according to an aspect;

Fig. 6 is a block diagram of a network device operable for providing wireless devices with an asset allocation option, according to a further aspect;

Fig. 7 is a flow diagram of a method for determining biddable wireless device assets and bidding on the determined wireless device assets, according to an aspect; and

Fig. 8 is a flow diagram of a method for providing wireless devices with an asset allocation option, according to yet another aspect.

### DETAILED DESCRIPTION

The present devices, apparatus, methods, computer-readable media, and process ors now will be described more fully hereinafter with reference to the accompanying drawings, in which aspects of the invention are shown. The devices, apparatus, methods, computer-readable media and processors may, however, be embodied in many different forms and should not be construed as limited to the aspects set forth herein; rather, these aspects are provided so that this disclosure will be thorough and complete, and will fully convey the scope of the disclosure to those skilled in the art. Like numbers refer to like elements throughout.

Additionally, in the following description, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

The various aspects are described herein are in connection with a wireless communication device. A wireless communication device can also be called a subscriber station, a subscriber unit, mobile station, mobile, remote station, access point, remote terminal, access terminal, user terminal, user agent, a user device, or user equipment. A subscriber station may be a cellular telephone, a cordless telephone, a Session Initiation Protocol (SIP) phone, a wireless local loop (WLL) station, a personal digital assistant (PDA), a handheld device having wireless connection capability, or other processing device connected to a wireless modem.

For purposes of aspects herein disclosed, the following terms are defined. It should be noted that definition of the terms should not be construed as limiting any of the aspects herein described:

*Media content providers -* entities that desire to place and/or present content, such as advertising, on a wireless device.

*Media content operators -* entities that provide for delivery and presentation of media content on wireless devices.

*Wireless device users -* the individual or group of individuals that are commonly in possession of the wireless device or otherwise operate the wireless device.

*Wireless device assets -* any feature, application, or mechanism associated with a wireless device that supports storage of and/or presentation of media content, such as, display wallpaper, audio ringtones, visual ringtones, multimedia ringtones, memory and the like.

*Bidding constraints -* a media content provider's, such as an advertiser's, defined wireless device criteria and/or wireless device user criteria for providing media content, such as advertising, to a wireless device.

*Auction condition -* a condition for providing for an auction in which two or more media content providers desire access to the same or similar wireless device asset and have defined one or more same or similar bidding constraints.

*Biddable wireless device asset -* a wireless device asset in which one or more auction conditions have been determined to exist.

Present aspects provide systems, methods, and apparatus for media content distribution. More particularly, a bidding system implemented by media content operators or the like allows media content providers, such as advertisers, to define bidding constraints for a targeted audience and to bid on wireless device assets, such as wireless device memory, applications, ringtones, wallpapers and the like. For example, an auction condition occurs if two or more media content providers desire access to the wireless device asset and have defined one or more of the same bidding constraints. Additionally, the system provides for wireless device users to be provided with an option to participate in the allocation of their respective wireless device assets, such as memory, ringtones, wallpapers, applications and the like, and define conditions, such as content type, time period, and the like, which is to be met in order for the allocation of the wireless device asset to occur. In many aspects, wireless device users may be compensated in some form based on their willingness to opt-in to the asset allocation plan.

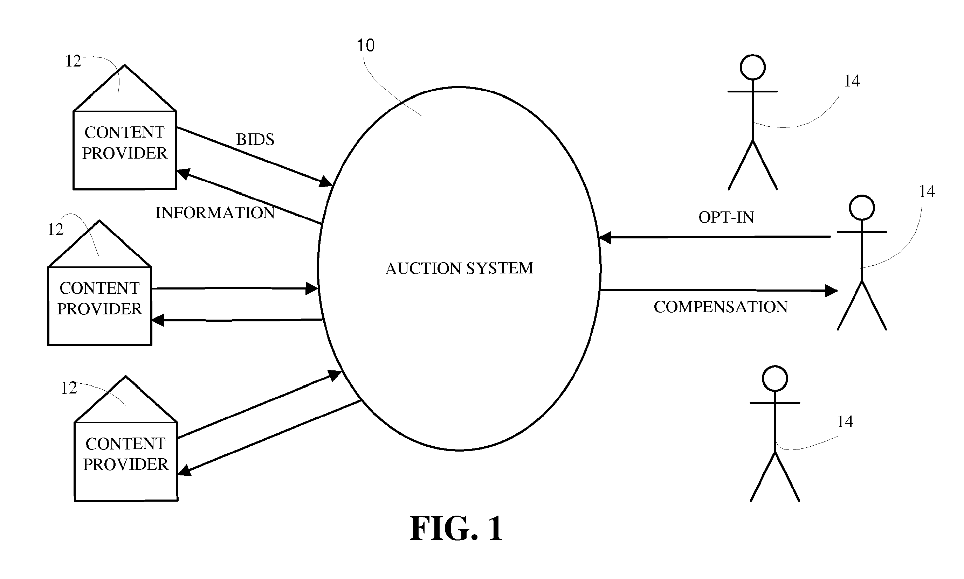

Fig. 1 provides a high-level schematic overview of a system for auctioning wireless device assets and providing wireless device users with asset allocation options, according to aspect. The auction system **10** is implemented in distributed computer network and may comprise one or more network devices and associated databases. The auction system is in network communication with multiple potential media content providers **12**. In accordance with one or more aspects, the media content providers **12** may desire to acquire wireless device assets, such as memory, ringtone, wallpaper, applications and the like, for the purpose of presenting media content, such as an advertisement or the like.

In one aspect, the auction system **10** may utilize the Internet as a communication medium between the system and the media content providers **12**. In such aspects, the auction system **10** provides information to the media content providers, via an Internet website or other network interface, that allows the media content providers **12** to identify one or more wireless device assets that they desire to acquire and identify bidding constraints related to the wireless device assets. A bidding constraint may be any condition associated with a bid to acquire the desired asset. For example, a bidding constraint may define a group of wireless devices and/or the time period for which the media content provider desires to acquire the wireless device asset. Further, for example, bidding constraints may include but are not limited to, a predefined time period, a predefined geographic area, predefined user profile data, such as an age range, an income range, or the like, predefined user usage data, such as users interested in a specific product or users having a specific interest.

The auction system **10** receives asset acquisition requests or bids from a plurality of media content providers **12** and determines if a match exists in two or more requests between an identified wireless device asset and a bidding constraint. In this regard, the term "match" refers to two or more asset acquisition requests identifying the same wireless device asset and having at least some intersection or overlap in a defined bidding constraint. If the auction system **10** determines that a match exists, the auction system **10** defines each matched wireless device asset and bidding constraint as a biddable wireless device asset that warrants an auction between the two or more media content providers **12** that have requested acquisition of an overlapping wireless device asset and bidding constraint. As such, an auction condition occurs when a media content operator cannot fulfill more than one request at the same time and multiple media content providers require access to a biddable wireless device asset. In turn, the auction system **10** provides an auction platform to the media content providers **12** to bid on the wireless device asset that has the associated bidding constraints.

For example, the asset system may receive a first asset acquisition request from a first media content provider **12** that defines the wireless device asset as wireless device display wallpaper and a bidding constraint as females between the ages of 25 - 40, and a second asset acquisition request from a second media content provider **12** that defines the wireless device asset as wireless device wallpaper and a bidding constraint as females between the ages of 35 - 45. In this instance, since an intersection exists between the age group ranges, a match is determined to exist between the first and second asset acquisition requests and, as such, an auction condition exists for the biddable wireless device asset of wallpaper and for a bidding constraint of females between the age of 35-40. Thus, according to present aspects, the auction system will provide an auction platform to the media content providers **12** to bid on the wireless device asset that has the associated bidding constraint, in this instance, wireless device wallpaper for wireless devices having users that are female between the ages of 35-40.

The auction system **10** may provide for any known type of bidding system for bidding on the wireless device asset that has at least one bidding constraint. For example, a timed auction, a sealed bid auction, a Dutch or reverse bid auction, a predetermined fixed price sale or the like may be implemented by the auction system. The auction system also includes all future known auctions or bidding systems.

Based on the bids received from the media content providers **12**, the auction system will determine an auction winner, and allocate use of the wireless device asset to the winning media content provider. Once the wireless device asset has been allocated, the media content provider may provide content, such as advertising or the like, to the acquired group of wireless device assets.

From the wireless device perspective, the users **14** generally consider many of the wireless device assets to be personal assets that are in the control of the user. For example, the ringtone and wallpaper have traditionally been used as a medium for presenting the user's desired ringtone or wallpaper. In addition, memory on a wireless device is often limited and, therefore, a user may desire not to allocate a significant portion of the memory to media content providers, who may desire to store content such as advertising or other marketing materials, applications or programs in the memory for subsequent presentation on the wireless device. As such, in some aspects, the auction system **10** may provide the wireless device user **14** an asset allocation option that allows the user of the wireless to opt-in or otherwise decline the allocation of wireless device assets, such as ringtone, wallpaper, memory, applications and the like. The asset allocation option may be a setting stored on the respective wireless device or the option may be determined via a response to a message delivered wirelessly to the wireless device via any known communication media, such as Short Message Service (SMS), Multimedia Message Service (MMS), electronic mail (email), voice mail, or the like.

The asset allocation option may provide for the user **14** to identify conditions that limit the allocation of a wireless device asset. For example, conditions may include, but are not limited to, one or any combination of allocation for a specific type of content, such as advertisements for a specific product type, allocation during a specific time period, allocation when the device is located in a specific geographic region and the like. As such, if the user identifies one or more conditions for the allocation of a wireless device asset, the allocation of the wireless device asset may generally only occur if the conditions are met.

In many aspects, the auction system **10** may additionally include compensation as an enticement to encourage the wireless device user **14** to participate in the allocation of wireless device assets. As previously mentioned, some of the allocated wireless device assets are viewed by the user as personal assets within the control of the user and, therefore, in order to acquire the wireless device asset, the user may feel the need to be justly compensated. Thus, if the user chooses to participate (i.e., opt-in) in the allocation of wireless device assets, the user may be compensated in accordance with a predetermined compensation scheme.

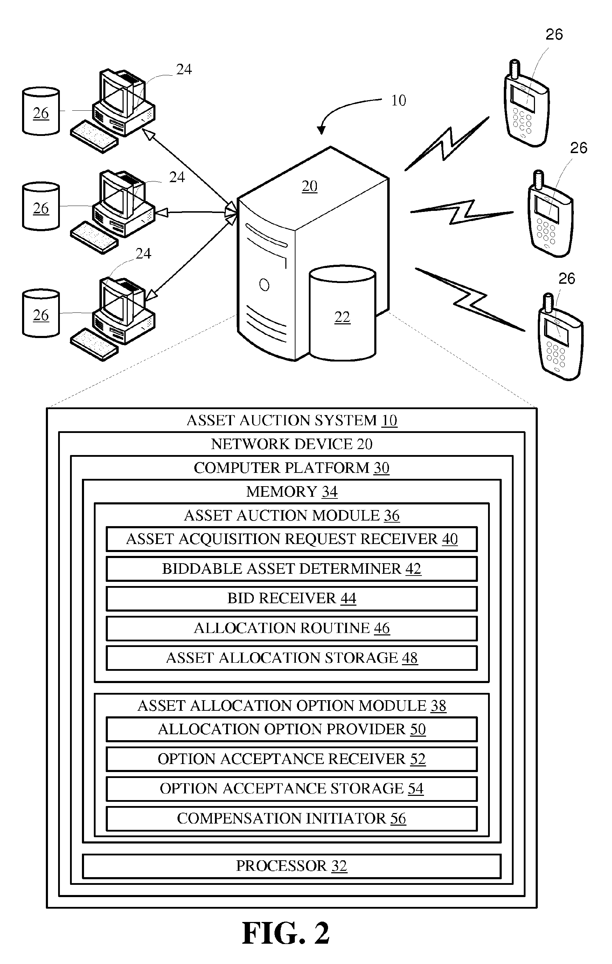

Fig. 2 provides a block diagram of a system for auctioning wireless device assets and providing wireless device users asset allocation options, according to one aspect. The system **10** includes one or more network devices **20**, such as servers or the like and corresponding databases **22**. For the sake of clarity, the system shown in Fig. 2 is limited to a single network device **20** and database **22**, although certain aspects may include multiple network devices **20** and/or databases **22.** Additionally, databases **22** may be separate entities or they may be databases included within any of the one or more network devices **20**. The network device is in either wired or wireless communication with a plurality of computing devices **24,** wherein each computing device is in control of a media content provider **12** (not shown in Fig. 2). The computing device **24** is in communication with content databases **26** that store content that media content providers desire to provide to wireless device assets. Additionally, the network device **20** is in communication, at least partially, in wireless communication, with wireless devices **24,** wherein each wireless device is in the control of a user **14** (not shown in Fig. 2).

Each network device **20** includes a computer platform **30** having a processor **32** and memory **34**. Memory **34** includes an asset auction module 36 that is executable by the processor **32** and operable to provide media content providers **12** a bidding process for wireless device assets having defined bidding constraints and an asset allocation option module **38** that is executable by the processor **32** and operable to provide wireless device users **14** the option to participate in the allocation of wireless device assets associated with the wireless device **12.**

The asset auction module **36** includes an asset acquisition request receiver **40** operable to receive, from the media content providers **12,** an asset acquisition request identifying at least one wireless device asset and at least one bidding constraint associated with each wireless device asset. As previously noted, the wireless device assets may include, but are not limited to, wallpaper, ringtone and memory. Bidding constraints may be any condition that serves to identify a specific group of and/or characteristics associated with wireless devices or wireless device users or a time period for providing content. The asset auction module **36** additionally includes a biddable asset determiner **42** operable to determine a biddable wireless device asset based on two or more asset acquisition requests identifying an equivalent wireless device asset and at least one match of a bidding constraint associated with the equivalent wireless device asset. As previously noted, a match of a bidding constraint is not limited to an exact match of the bidding constraint but may also include the intersections and/or overlaps of a defined bidding constraint grouping, range, period, or the like. As such, the biddable wireless device asset includes the equivalent wireless device asset and the at least one matched bidding constraint.

The asset auction module **36** additionally includes a bid receiver **44** that is operable to receive bids on the biddable wireless device asset from media content providers. In some aspects, the bid receiver **44** may be configured to receive the bids from only the requesters defining the bidding constraints used to determine the biddable wireless device asset. In other aspects, bidding on the biddable wireless device asset may be opened up to all or a portion of all of the media content providers. From whom and the manner in which bids are received will be dictated by how the auction is configured. As previously noted, the auction system 10 may implement any conceivable auction process including, but not limited to, a timed auction, a sealed bid auction, a Dutch or reverse bid auction and the like.

Additionally, the asset auction module **36** includes an allocation routine **46** operable to determine a winning media content provider for the biddable wireless device asset. In one aspect, the allocation routine may be configured to determine the winning media content provider as the media content provider that provides the highest bid in the auction. However, the predetermined allocation routine may take into account other factors, such as media content provider priority status and the like, in determining a winning media content provider. In addition, the predetermined allocation routine **46** may be configured to optimize the received bids over a predetermined time period to attempt to maximize the gain achieved by the auction system **10**. Thus, the winning media content provider may not necessarily be the highest bidder. The asset auction module **36** additionally includes asset allocation storage **48** operable for storing an identification of the biddable wireless device asset as an allocated wireless device asset associated with the winning media content provider. For example, based on the defined bidding constraints, the allocated wireless device asset will, in most aspects, be allocated for a finite predetermined period of time. Additionally, while asset allocation storage **48** is illustrated in relation to memory **34** of network device **20,** it may alternatively be located in any one of databases **22.**

The asset allocation option module **38** includes an allocation option provider **50** operable to provide an allocation option to a plurality of wireless devices to participate in the allocation of one or more wireless device assets. The allocation option provider **50** may be configured to communicate the option via any wireless device communication mechanism such as, but not limited to, SMS, MMS, email, voice mail or the like. The option allows for the identification of one or more conditions as a preface to the allocation of at least one of the wireless device assets. As previously noted the conditions may include, but are not limited to, one or any combination of the type of media content, such as advertising content for a specific product type, a time period for allocating a wireless device asset, a geographic location for allocating a wireless device asset and the like.

The asset allocation option module **38** additionally includes an option acceptance receiver **52** operable to receive an acceptance of the allocation option including identification of at least one wireless device asset to be allocated. In some aspects, the acceptance of the option may additionally include identification of one more conditions that is to be met to trigger the allocation of the wireless device asset. The asset allocation option module **38** also includes option acceptance storage **54** operable for storing the option acceptance for a predetermined period of time. Based on defining conditions, system configuration or otherwise, the option acceptance may be configured to last for a predetermined period of time. Additionally, while option acceptance storage **54** is illustrated in relation to memory **34** of network device **20**, it may alternatively be located in any one of databases **22.**

The asset allocation option module **38** additionally includes compensation initiator **56** operable to initiate a compensation scheme for the wireless device that has provided an option acceptance. For example, compensation for agreeing to allocate wireless device assets may be at a rate proportional to the winning bid of the associated auction process. Alternatively, for example, the compensation may be based on a rate that is proportional to the number of conditions identified and the number of identified conditions requested, and bid on, by media content providers. Compensation may be in any known form, such as, but not limited to, one or any combination of a reduction in service rate, a rebate, an awards program, lottery chances, direct payment, or the like.

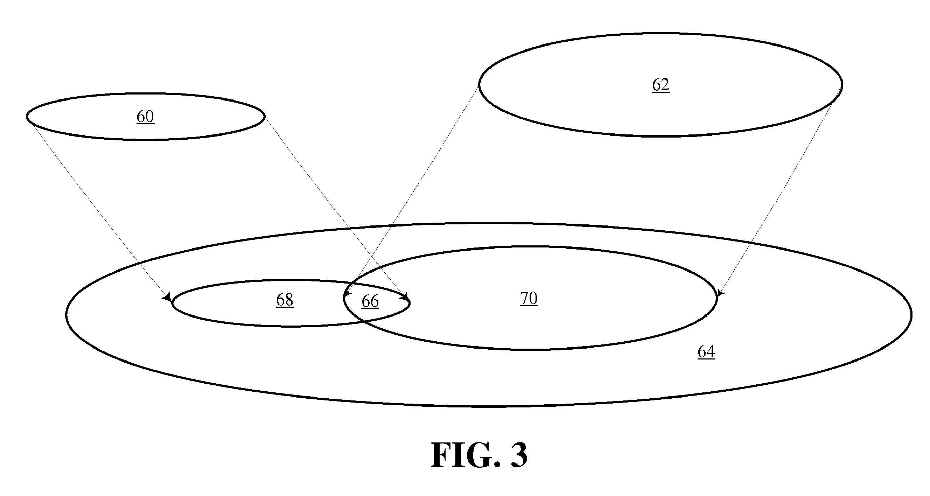

Fig. 3 provides a schematic diagram that illustrates an example of how biddable wireless device assets may be determined, according to one aspect. A first media content provider defines first bidding constraints **60** associated with a first wireless device asset. For example, the first media content provider may define the first bidding constraint as a specific geographic area, a specific time period, such as a specific time of day or user related bidding constraints, such as a specific gender, a specific age range, a specific user interest, a specific income range. For the purpose of the illustrated example, assume that the first bidding constraint is user annual income in the range of $200,000 - $300,000 and the first wireless device asset is wireless device wallpaper. A second media content provider defines second bidding constraints **62** associated with the first wireless device asset, i.e., the equivalent wireless device asset that the first media content provider desires to acquire. For the purpose of the illustrated example, the second bidding constraint is user annual income in the range of $150,000 - $225,000 for the equivalent wireless device wallpaper asset. Each media content provider provides the auction system with an asset acquisition request, which identifies the wireless device asset and their respective bidding constraints.

At the auction system level, the media content operator or other auction system providing entity compares the bidding constraints for equivalent wireless device assets. In the illustrated example of Fig. 3, the auction system applies the bidding constraints to the overall population **64** of wireless device and/or wireless device users. For the purpose of the illustrated example, the overall population **64** reflects all of the annual income levels for all of the wireless device users in a specific area, for example all users in the city of San Diego, California. The intersection region of the first and second bidding constraints **60** and **62** define the biddable wireless device asset **66**. In the illustrated example, the biddable wireless asset 66 is defined as wireless device wallpaper for users having an annual income range of $200,000 - $225,000. The non-intersecting portions **68, 70** of respective bidding constraints **60** and **62** provide for wireless device assets that may be allocated based on a fixed price or any other known pricing scheme. Thus, for the illustrated example, non-intersecting portion **68** reflects a bidding constraint of wireless device users having an annual income of $225,000 - $300,000 and non-intersecting portion **70** reflects a bidding constraint of wireless device users having an annual income of $175,000 - $200,000. In the instance in which no other media content provider submits an asset acquisition request with a predefined time period for wireless device wallpaper and having defined bidding constraint of annual income between $175,000 - $200,000 and or $225,000 - $300,000, these wireless device assets will be allocated using a fixed price scheme or some other non-auction allocation process.

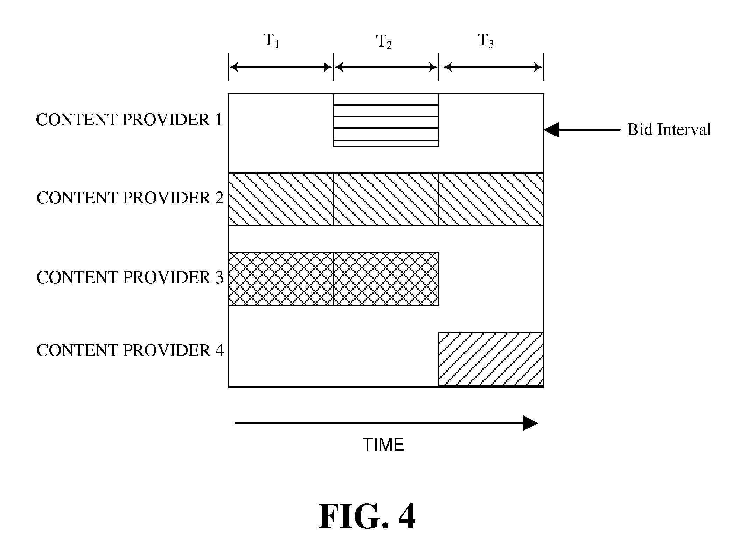

Fig. 4 provides an example of an allocation routine that implements an optimization routine to determine a winning media content provider for a biddable wireless device asset, according to one aspect. In the illustrated example, four different media content providers have provided bids for a biddable wireless device asset. Each media content provider desires access to the wireless device asset at different time intervals. In the illustrated example of Fig. 4, three time periods T₁, T₂, and T₃ are defined, such that media content provider 1 desires access to the second time period, media content provider 2 desires access for all three time periods, media content provider 3 desires access for the first two time periods and media content provider 4 desires access for the third time period. A "period" is defined as an interval of time. Periods can be as large as hours to an arbitrarily small interval of time. Typical duration of the period would depend on the situations and business needs. For the purpose of the illustrated example, we assume that media content provider 1 provides a maximum auction bid of $10 for the second time period, media content provider 2 provides a maximum auction bid of $5 for each of the three time periods, media content provider 3 provides a maximum auction bid of $3 for each of the first two time periods and media content provider 4 provides a maximum bid of $8 for the third time period. The optimization routine may determine which bid provides the auction system provider with the highest overall gain for the predefined time period. For example, the auction/media content service provider may accrue $10 (1 x $10) if media content provider 1 is determined to be the winning content provider, $15 (3 x $5) if media content provider 2 is determined to be the winning content provider, $6 (2 x $3) if media content provider 3 is determined to be the winning content provider and $8 (1 x $8) if media content provider 4 is determined to be the winning content provider. Thus, the allocation routine may optimize the bids over a certain time interval to provide bid optimization and, in the example of Fig. 4, this would result in media content provider 2 being deemed the winning content provider based on the highest overall gain for the predefined time interval, which can be made up of multiple periods. In some aspects, for each bid, the optimization routine may further include fixed fee or other non-auction income associated with each time period not bid upon, but within the time interval of the optimization, e.g. T₁ and T₃ with respect to the bid.

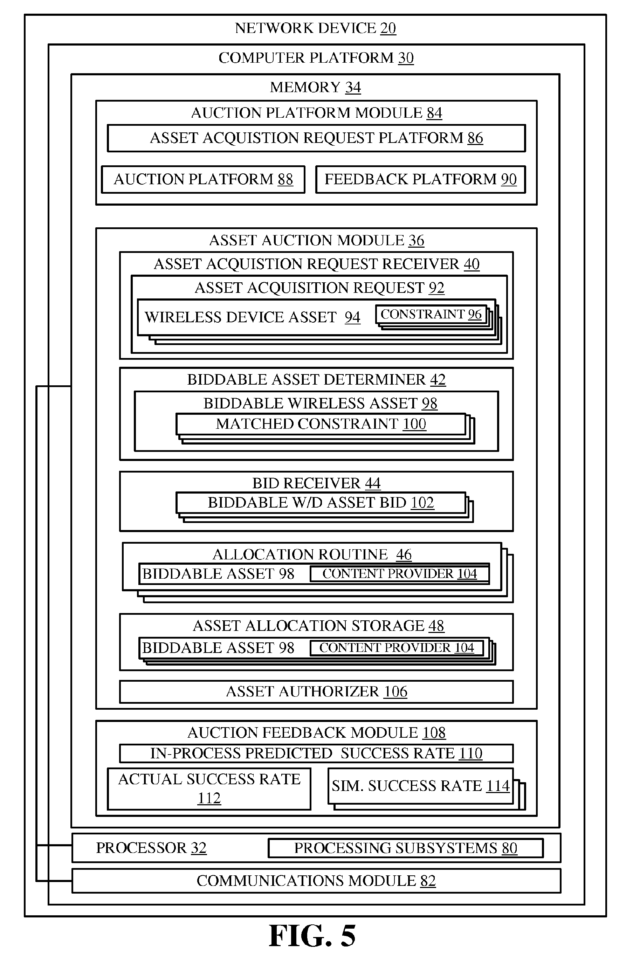

Referring to Fig. 5, according to another aspect, a detailed block diagram is illustrated of a network device for auctioning wireless device assets is provided. The network device **20** may comprise at least one of any type of hardware, server, personal computer, mini computer, mainframe computer, or any computing device either special purpose or general computing device. Further, the modules and applications described herein as being operated on or executed by the network device **20** may be executed entirely on the network device **20** or alternatively, in other aspects, separate servers or computer devices may work in concert to provide data in usable formats to parties, and/or to provide a separate layer of control in the data flow between the computing devices **24,** wireless devices **26** and the modules and applications executed by network device **20.**

The network device **20** includes computer platform **30** that can transmit and receive data across a wired or wireless network, and that can execute routines and applications. Computer platform **30** includes a memory **34,** which may comprise volatile and nonvolatile memory such as read-only and/or random-access memory (RAM and ROM), EPROM, EEPROM, flash cards, or any memory common to computer platforms. Further, memory **34** may include one or more flash memory cells, or may be any secondary or tertiary storage device, such as magnetic media, optical media, tape, or soft or hard disk.

Further, computer platform **30** also includes a processor **32**, which may be an application-specific integrated circuit (ASIC), or other chipset, logic circuit, or other data processing device. Processor **32** includes various processing subsystems **80** embodied in hardware, firmware, software, and combinations thereof, that enable the functionality of network device **20** and the operability of the network device on a wired and/or wireless network. For example, processing subsystems **80** may allow for initiating and maintaining communications, and exchanging data, with other networked devices. For the disclosed aspects, processing subsystems **80** of processor **32** may include any subsystem components that interact with the asset allocation module **36**.

The computer platform **48** further includes a communications module **82** embodied in hardware, firmware, software, and combinations thereof, that enables communications among the various components of network device **20,** as well as between the network device **20**, and computing devices **24**. The communication module **82** may include the requisite hardware, firmware, software, and/or combinations thereof for establishing a wireless communication connection. The communication module **82** is operable to receive asset acquisition requests and wireless device asset bids from computing devices **26.**

The memory **34** of network device **16** also may include an auction platform module **84** operable to provide the media content providers a network interface for initiating asset acquisition requests, inputting biddable wireless asset bids and receive bid feedback and/or bidding outcome feedback. In this regard, the auction platform module **84** may include asset acquisition request platform **86**, auction bid platform **88** and auction feedback platform **90.** In one aspect the auction platform provides for implementing an Internet based auction platform or any other networked based platform may be implemented. The asset acquisition request platform **86** may be configured to notify media content providers of upcoming events that may of interest to media content providers. For example, a football game attending by a large amount of spectators may provide for large group of wireless device users having similar interests convening for a set period of time at a set location. Such event notification may serve to stimulate asset acquisition requests with bidding constraints related to the event, such as the time period, the geographic area, user interests, and the like.

The memory **34** of network device **16** also includes an asset auction module **36** operable to define biddable wireless device assets, auction the biddable wireless device assets, and determine a winning media content provider. The asset auction module **36** includes an asset acquisition request receiver **40** operable to receive, from the media content providers **12,** an asset acquisition request **92** identifying at least one wireless device asset **94** and at least one bidding constraint **96** associated with each wireless device asset. As previously noted, the wireless device assets may include, but are not limited to, one or any combination of wallpapers, ringtones, applications and memory. Bidding constraints may be any condition that serves to identify one or any combination of a specific group of wireless devices or wireless device users, a time period for providing content and/or a geographic area in which wireless devices may be located.

It should also be noted that the asset auction module may define the period for receiving acquisition requests, such that requests received during a predefined period are considered for determining a biddable wireless device asset. In addition, a period for receiving acquisition requests may be dynamically defined based on the occurrence of an impromptu event. For example, an emergency event, such as a weather event, may occur that requires the period for receiving asset acquisition requests to be minimal

The asset auction module **36** additionally includes a biddable asset determiner **42** operable to determine a biddable wireless device asset **98** based on two or more asset acquisition requests identifying an equivalent wireless device asset and at least one match of a bidding constraint associated with the equivalent wireless device asset. A match of a bidding constraint is not limited to an exact match of the bidding constraint but may also include the intersections and/or overlaps of a defined bidding constraint grouping, range, period, or the like. In some aspects, the biddable wireless device asset may include more than one bidding constraint, such as in instances in which two or more bidding constraints match. As such, the biddable wireless device asset **98** includes the equivalent wireless device asset and the at least one matched bidding constraint **100.**

The asset auction module **36** additionally includes a bid receiver **44** that is operable to receive biddable wireless device asset bids **102** on the biddable wireless asset **98** from media content providers. In some aspects, the bid receiver **44** may be configured to receive the bids from only the requesters that defined bidding constraints within the bidding constraints of the biddable wireless asset (i.e., the asset acquisition requesters that were used to determine the biddable wireless device asset). In other aspects, bidding on the biddable wireless device asset may be open to all or a portion of all of the media content providers. From whom and the manner in which bids are received will be dictated by how the auction is configured. As previously noted, the auction system **10** may implement any conceivable auction process including, but not limited to, a timed auction, a sealed bid auction, a Dutch or reverse bid auction and the like.

Additionally, the asset auction module **36** includes an allocation routine **46** operable to determine a winning media content provider for the biddable wireless device asset **98**. In this regard the allocation routine may be configured to determine the winning media content provider **104** as the media content provider that provides the highest bid in the auction. However, the predetermined allocation routine **46** may take into account other factors, such as media content provider priority status and the like, in determining a winning media content provider **104**. In addition, the predetermined allocation routine **46** may be configured to optimize the received bids over a predetermined time period to attempt to maximize the gain achieved by the auction system **10.** Thus, the winning media content provider may not necessarily be the highest bidder.

The asset auction module **36** additionally includes an asset allocation storage **48** operable for storing the biddable wireless device asset **98** as an allocated wireless device asset associated with the winning media content provider **104** for a predetermined period of time. Based on defining bidding constraints or otherwise, the allocated wireless device asset will, in most aspects, be allocated for a finite predetermined period of time. Additionally, while asset allocation storage **48** is illustrated in relation to memory **34** of network device **20** it may alternatively be located in any one of databases **22.**

The asset auction module **36** may additionally include an asset authorizer **106** operable to authorize the media content provider to provide media content to the allocated wireless device asset. In some aspects, the provided media content may include, advertising content, marketing content, government information content, and the like. In the instance in which the allocated wireless device asset is a ringtone, advertising content may include inserting a catch phrase or the like in the wireless device ringtone or replacing the wireless device ringtone with a media content provider's jingle or the like. The ringtone insertion may be only for a small portion of the content. For example, in a predetermined ringtone the content provider may insert the word of the product or the service at predetermined intervals. In the instance in which the allocated wireless device asset is wallpaper, video advertising content may be inserted within (i.e., overlaid on) the wireless device's existing wallpaper or the wallpaper may be replaced in total. In the instance in which the allocated wireless device asset is an application, video, audio, or multimedia advertising content may be inserted in the application or otherwise executed in conjunction with the application. In the instance in which the allocated wireless device asset is memory, the media content provider may be allocated a separate amount of space in a wireless device's memory and may be authorized to provide any audio, video, or multimedia advertisement content having requisite size limitations. The audio, video, or multimedia content is subsequently accessed by applications, such as broadcast or multicast media players that have allotted time periods for advertisements.

The memory **34** of network device **20** may additionally include an auction feedback module **108** operable to provide bidding media content providers with in-process and/or post process bidding results. In terms of in process bidding results, the feedback module **108** may be configured to provide the user with an in-process predicted success rate **110** based on a proposed actual bid and historical data related to the wireless device asset and the associated bidding constraints. Based on the in-process predicted success rate the media content provider may agree to submit the proposed bid as an actual bid or may choose to adjust their bid, higher or lower, based on the predicted success rate. In terms of post process results, the feedback module **108** may be configured to define the actual success rate **112,** which is defined as the ratio between wireless device assets allocated to the media content provider versus the wireless device assets attempted to be acquired by the media content provider through the bidding process. Additionally, the feedback module may be configured to provide one or more simulated success rates **114** that are defined as the ratio between wireless device assets potentially allocated to a media content provider versus the wireless device assets attempted to be procured by the media content provider based on one or more predefined potential bid amounts. In other words, the simulated success rates show the rate of success that would have been achieved if the bidding media content provider had provided a higher bid amount.

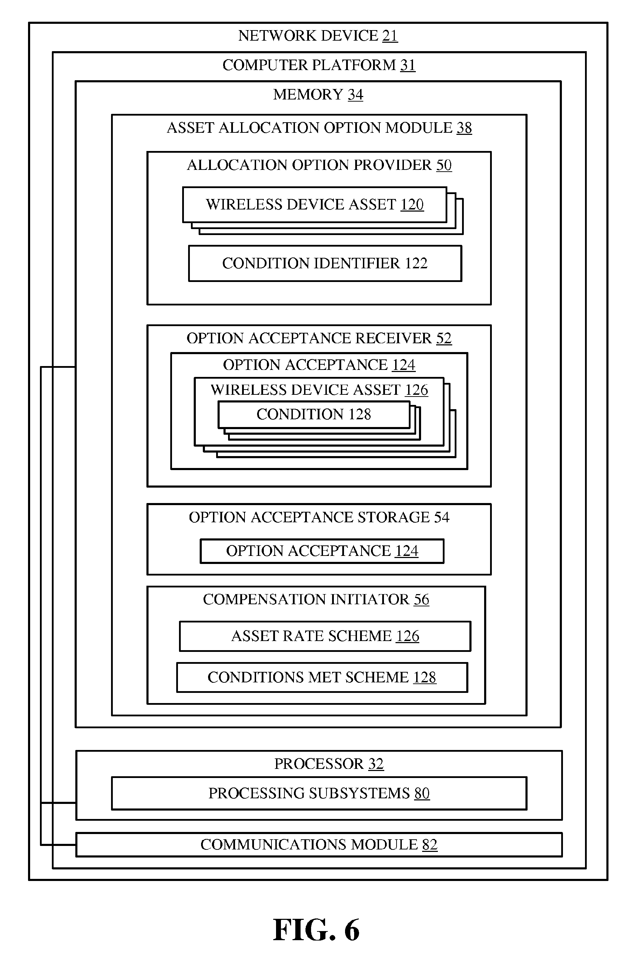

Referring to Fig. 6, according to another aspect, a detailed block diagram is illustrated of a network device for providing wireless devices an asset allocation option. The network device **21**, which may include network device **20**, may comprise at least one of any type of hardware, server, personal computer, mini computer, mainframe computer, or any computing device either special purpose or general computing device. Further, the modules and applications described herein as being operated on or executed by the network device **21** may be executed entirely on the network device **21** or alternatively, in other aspects, separate servers or computer devices may work in concert to provide data in usable formats to parties, and/or to provide a separate layer of control in the data flow between the computing devices **24,** wireless devices **26** and the modules and applications executed by network device **21**.

The network device **21** includes computer platform **31** that can transmit and receive data across a wired or wireless network, and that can execute routines and applications. Computer platform **31** includes a memory **34,** which may comprise volatile and nonvolatile memory such as read-only and/or random-access memory (RAM and ROM), EPROM, EEPROM, flash cards, or any memory common to computer platforms. Further, memory **34** may include one or more flash memory cells, or may be any secondary or tertiary storage device, such as magnetic media, optical media, tape, or soft or hard disk. Further, computer platform **31** also includes a processor **32,** which may be an application-specific integrated circuit (ASIC), or other chipset, logic circuit, or other data processing device. Processor **32** includes various processing subsystems **80** embodied in hardware, firmware, software, and combinations thereof, that enable the functionality of network device **20** and the operability of the network device on a wired and/or wireless network. For example, processing subsystems **80** may allow for initiating and maintaining communications, and exchanging data, with other networked devices. For the disclosed aspects, processing subsystems **80** of processor **32** may include any subsystem components that interact with the asset allocation option module **36**.

The computer platform **48** further includes a communications module **82** embodied in hardware, firmware, software, and combinations thereof, that enables communications among the various components of network device **21**, as well as between the network device **21**, and computing devices **24.** The communication module **82** may include the requisite hardware, firmware, software, and/or combinations thereof for establishing a wireless communication connection. The communication module **82** is operable to receive asset acquisition requests and asset bids from computing devices **26.**

The memory **34** further includes an asset allocation option module **38** operable to extend asset allocation options to wireless devices. The asset allocation option module **38** includes an allocation option provider **50** operable to provide an allocation option, to a plurality of wireless devices, to participate in the allocation of one or more wireless device assets **120.** The auction system provider or other media content service provider may identify the wireless device asset they wish to acquire or the wireless device user may identify the wireless device assets that they wish to allocate. The allocation option provider **50** may be configured to communicate the option via any wireless device communication mechanism such as, but not limited to, SMS, MMS, email, voice mail or the like. The asset allocation option provider **50** may include a condition identifier **122** operable to provide the wireless device user with the ability to identify of one or more conditions as a preface to the allocation of at least one of the wireless device assets that have been identified for allocation. As previously noted the conditions may include, but are limited to, the type of media content, such as advertising content for a specific product type, a time period for allocating a wireless device asset, a geographic location for allocating a wireless device asset and the like. In those aspects in which an acceptance of an asset allocation option results in user compensation, the compensation rate may be based on the number of conditions identified and allocated via a bidding processing.

The asset allocation option module **38** additionally includes an option acceptance receiver **52** operable to receive an acceptance **124** of the allocation option including identification of at least one wireless device asset **126** to be allocated. In some aspects, the acceptance of the option may additionally include identification of one more conditions **128** that is to be met to trigger the allocation of the wireless device asset.

The asset allocation option module **38** also includes option acceptance storage **54** operable for storing the option acceptance for a predetermined period of time. The option acceptance will be mapped in the storage to the wireless device and/or user of the wireless device. Based on defining conditions, system configuration or otherwise, the option acceptance may be configured to last for a predetermined period of time. Additionally, while option acceptance storage **54** is illustrated in relation to memory **34** of network device **21**, it may alternatively be located in any one of databases **22.**

The asset allocation option module **38** additionally includes compensation initiator **56** operable to initiate a compensation scheme for the wireless device that has provided an option acceptance. Compensation for agreeing to allocate wireless device assets may be at an asset compensation rate **126** defined as the rate proportional to the winning bid of the associated auction process. Alternatively, the compensation may be at a condition quantity rate 128 defined as a rate that is proportional to the number of conditions identified and the number of identified conditions bid on by media content providers. Compensation may be in any known form, such as, but not limited to, a reduction in service rate, a rebate, an awards program, lottery chances, direct payment, or the like.

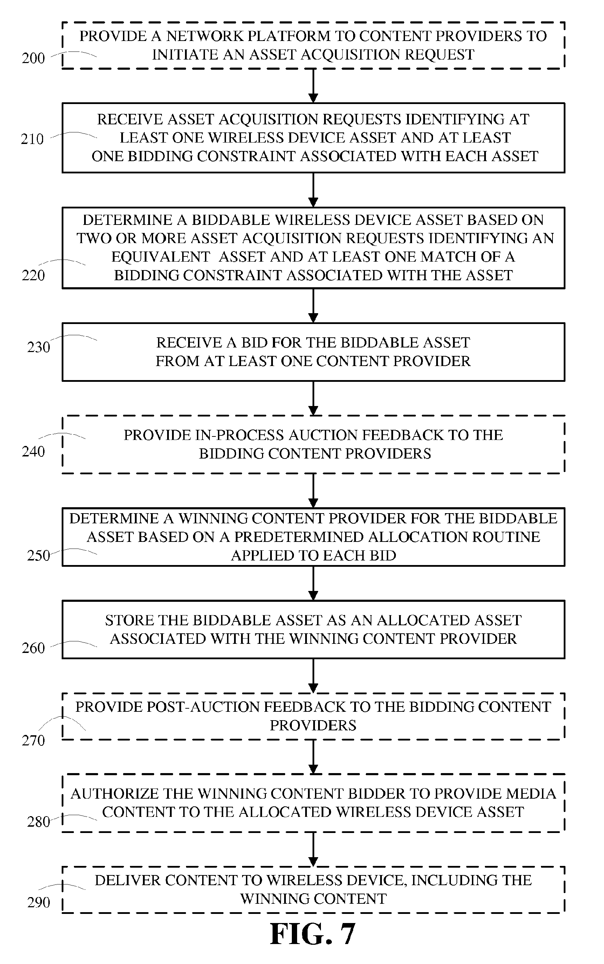

Fig. 7 is a flow diagram of a method for determining biddable wireless device assets and determining through a bid process a winning media content provider for the wireless device asset, according to an aspect. At optional Event **200**, a network platform is provided to media content providers to initiate an asset allocation request. The network platform may include an Internet website or the like that allows the media content providers to interface with the auction system. The asset allocation request may include at least one identified wireless device asset that the media content provider has targeted for acquisition and one or more bidding constraints associated with the wireless device asset. In one aspect, the wireless device assets may include, but are not limited to, ringtones, wallpapers, applications, and memory. In one aspect, the bidding constraints may include, but are not limited to, a specific time period, a specific geographic location, specific user profile information, such as gender, age, income and the like, user usage information, such as the type and repetitions of use of services, applications and the like on the wireless device.

At Event **210,** asset acquisition requests are received by the auction system from multiple media content providers and, at Event **220,** biddable wireless device assets are determined based on two or more asset acquisition requests identifying an equivalent wireless device asset and at least one matching bidding constraint associated with the wireless device asset. An equivalent wireless device asset may not necessarily be the exact same wireless device asset, but rather, any wireless device asset that is deemed to be equivalent by the auction system. Matching of bidding constraints may include an exact match of bidding constraints or any overlap or intersecting of a bidding constraint range, interval, period, group, or the like.

At Event **230**, once the biddable wireless device asset had been determined, the bidding process is initiated and bids are received from one or more media content providers. The bidding process may be open to all media content providers or any subset of media content providers, such as group including the media content providers that initiated asset acquisition requests that have the same or similar wireless device assets and matching bidding constraints. The bidding process may implement any known or future known bidding process, such as a timed auction, a sealed bid auction, a Dutch or reverse auction and the like.

At optional Event **240**, in-process auction feedback may be provided to media content providers prior to communicating the bid to the auction system. For example, in-process auction feedback may provide for a bidding media content provider to propose a bid amount and the auction system may respond with a likelihood of success based on prior auction history for similar wireless device assets with similar bidding constraints. This type of in-process feedback allows the bidding media content provider to re-adjust their bid accordingly prior to sending the actual bid to further insure the success of their bid.

At Event **250**, a winning media content provider is determined for the biddable wireless device asset based on predetermined allocation routine applied to each bid. The predetermined allocation routine may take into account the type of bidding process that is being implemented. Additionally, the predetermined allocation routine may provide for optimization of bids over predefined time intervals to insure that the auction provider achieves maximum profit. Also, the predetermined allocation routine may take into account factors other than the bid amount, such media content provider priority status or the like, in determining the winning media content provider. Thus, in some instances, the winning media content provider may not have provided the highest bid amount. At Event **260**, the biddable wireless device asset is stored as an allocated wireless device asset associated with the winning media content provider for a predetermined period of time.

At optional Event **270,** post-auction feedback may be provided to the media content providers that provided bids. Post-auction feedback relies on statistical data from the completed auction/bidding process. The post-auction feedback may include an actual success rate defined as the actual wireless devices assets acquired by the media content provider versus the wireless device assets that the media content provider attempted to acquire. Additionally, the post-auction feedback may include simulated success rates that provide the media content provider with a simulated rate of success for acquiring wireless device assets based on simulated higher bid amounts.

At optional Event **280**, the auction system may authorize the winning media content provider to provide media content to the allocated wireless device asset. In some aspect, the media content is advertising content, marketing content or other informational content. In those aspects in which the provided media content is advertising content, the advertising content may include a ringtone advertisement insertion, a ringtone advertisement jingle, a wallpaper video/multimedia advertisement replacement, a wallpaper vide/multimedia advertisement insertion, an audio/video/multimedia application insertion, a video advertisement, an audio advertisement, a multimedia advertisement or the like.

At optional Event **290,** the auction system may further deliver content to wireless devices, including the winning content.

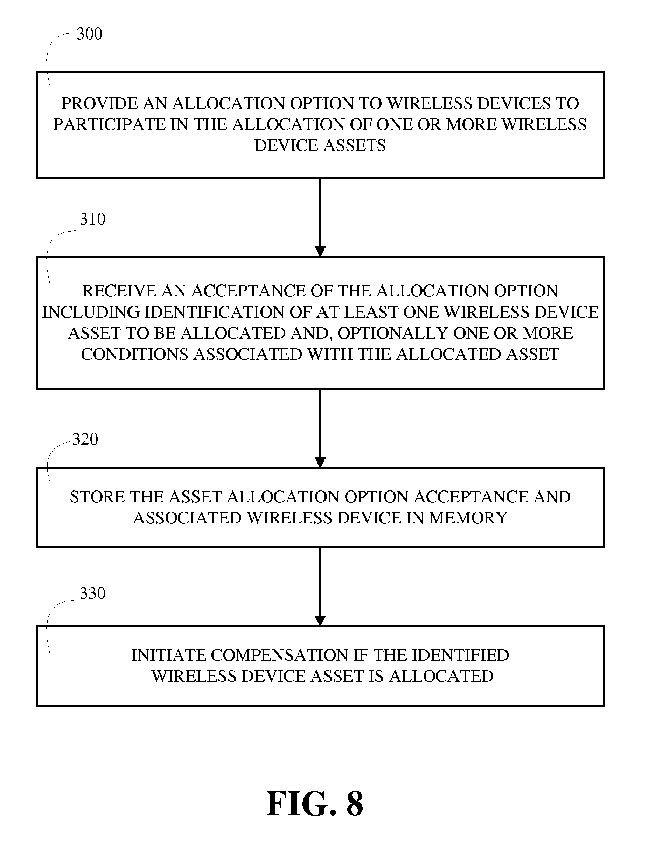

Fig. 8 provides a flow diagram of a method for providing wireless devices an asset allocation option, according to an aspect. At Event **300,** allocation options are provided to wireless devices to participate in the allocation of one or more wireless device assets. Additionally, the option provides for the identification of one or more conditions that is to be met for the allocation of the wireless device asset to occur. The option may identify the wireless device asset desired to be allocated or the wireless device user may identify those wireless device assets, which they desire to allocate. The wireless device assets may include ringtones, wallpaper, memory, applications, and the like. The conditions may include, but are not limited to, the type of media content, the location of the wireless device, a time period/interval, or the like.

At Event **310,** an acceptance of the allocation option is received, including identification of at least one wireless device asset to be allocated and, optionally, one or more conditions associated with the allocated wireless device asset. At Event **320**, the acceptance is stored in an associated database that maps the acceptance to the wireless device, the identified wireless device assets and, optionally, any corresponding conditions.

At Event **330,** compensation is initiated if the wireless device asset is allocated. In some instances, a media content provider for the allocated wireless device asset may have been previously identified, such as through a winning bidding process or the like, in which case, compensation may be immediately initiated. In other instances, especially those in which one or more conditions have been associated with the allocation of the wireless device asset, a media content provider will be identified or attempted to be identified after the wireless device has agreed to allocate the wireless device asset. In this instance, the actual allocation of the wireless device asset may not occur if one or more of the conditions placed on the wireless device asset are not met by the media content providers. In one aspect, compensation may be based on a rate proportional to the rate at which the winning media content provider paid at auction. In other aspects, the compensation rate may be proportional to the quantity of conditions identified and met by media content providers. Additionally, compensation may be in any known format, such as a decrease in service rates, such as cellular rates, a rebate, direct payment, an awards program, raffle entries, or the like.

The various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Additionally, at least one processor may comprise one or more modules operable to perform one or more of the steps and/or actions described above.

Further, the steps and/or actions of a method or algorithm described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. An exemplary storage medium may be coupled to the processor, such that the processor can read information from, and write information to, the storage medium. In the alternative, the storage medium may be integral to the processor. Further, in some aspects, the processor and the storage medium may reside in an ASIC. Additionally, the ASIC may reside in a user terminal. In the alternative, the processor and the storage medium may reside as discrete components in a user terminal. Additionally, in some aspects, the steps and/or actions of a method or algorithm may reside as one or any combination or set of codes and/or instructions on a machine readable medium and/or computer readable medium, which may be incorporated into a computer program product.

While the foregoing disclosure discusses illustrative aspects and/or implementations, it should be noted that various changes and modifications could be made herein without departing from the scope of the described aspects and/or implementations as defined by the appended claims. Furthermore, although elements of the described aspects and/or implementations may be described or claimed in the singular, the plural is contemplated unless limitation to the singular is explicitly stated. Additionally, all or a portion of any aspect and/or implementation may be utilized with all or a portion of any other aspect and/or implementation, unless stated otherwise.

Thus, present aspects provide systems, methods and apparatus for media content distribution and, more particularly, a bidding system that allows media content providers, such as advertisers, to define bidding constraints for a targeted audience and to bid on wireless device assets, such as wireless device memory, application, ringtone, wallpaper and the like, if a biddable wireless device asset is defined. A biddable wireless device asset is defined if two or more two or more media content providers (i.e., advertisers) desire access to the same wireless device asset and have defined one or more of the same bidding constraints for the wireless device asset. Additionally, the system providers for wireless device users to be provided with an option to participate in the allocation of their respective wireless device assets, such as memory, application, ringtone, wallpaper and the like and define conditions, such as content type, time period, and the like, which is to be met in order for the allocation of the wireless device asset to occur. In one or more aspects, wireless device users may be compensated in some form based on their willingness to opt-in to the asset allocation plan.

Many modifications and other aspects will come to mind to one skilled in the art to which this invention pertains having the benefit of the teachings presented in the foregoing descriptions and the associated drawings. Therefore, it is to be understood that the aspect is not to be limited to the specific aspects disclosed and that modifications and other aspects are intended to be included within the scope of the appended claims. Although specific terms are employed herein, they are used in a generic and descriptive sense only and not for purposes of limitation. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A method for auctioning a wireless device-related asset, comprising:
receiving, from a plurality of media content providers, an asset acquisition request identifying at least one wireless device asset and at least one bidding constraint associated with each wireless device asset;
determining a biddable wireless device asset based on two or more asset acquisition requests identifying an equivalent wireless device asset and at least one match of a bidding constraint associated with the equivalent wireless device asset, wherein the biddable wireless device asset includes the equivalent wireless device asset and the matched bidding constraint;
receiving a bid for the biddable wireless device asset from at least one of the two or more media content providers;
determining a winning media content provider for the biddable wireless device asset based on a predetermined allocation routine applied to each bid; and
storing the biddable wireless device asset as an allocated wireless device asset associated with the winning media content provider for a predetermined period of time.

2. The method of claim 1, wherein receiving, from a plurality of media content providers, the asset acquisition request identifying at least one wireless device asset and at least one bidding constraint further comprises receiving the asset acquisition request identifying at least one wireless device asset and at least one bidding constraint chosen from the group of bidding constraints consisting of wireless device location, time period, user profile information and user usage information.

3. The method of claim 1, wherein determining a winning media content provider for the biddable wireless device asset based on a predetermined allocation routine applied to each bid further comprises optimizing each bid over a predetermined period of time to determine which bid is a winning wireless device asset bid

4. The method of claim 1, further comprising providing each bidder automated feedback related to an outcome of a bid process.

5. The method of claim 4, wherein providing each bidder automated feedback related to an outcome of the bid process further comprises providing an actual success rate that is defined as the ratio between wireless device assets allocated to an media content provider versus the wireless device assets potentially procured by the media content provider.

6. The method of claim 4, wherein providing each bidder automated feedback related to an outcome of the bid process further comprises providing one or more simulated success rates that are defined as the ratio between wireless device assets potentially allocated to an media content provider versus available wireless device assets.

7. The method of claim 1, further comprising authorizing the winning media content provider to provide media content for the allocated wireless device asset.

8. The method of claim 1, further comprising providing an allocation option to a plurality of wireless devices to participate in an allocation of one or more of the wireless device assets.

9. The method of claim 8, further comprising receiving an allocation indication from one or more wireless devices indicating a designation of at least one available wireless device asset as a wireless device asset to be allocated.

10. The method of claim 9, further comprising compensating an allocation of a wireless device asset at a rate proportional to the one or more winning wireless device asset bids for the wireless device's allocated wireless device assets.

11. The method of claim 9, wherein receiving an allocation indication from one or more wireless devices further comprises receiving an allocation indication that includes one or more conditions related to allocation of the at least one available wireless device asset, wherein the one or more conditions is to be met to trigger the allocation of the respective wireless device asset.

12. The method of claim 11, further comprising compensating an allocation of a wireless device asset at a rate proportional to the quantity of conditions identified, if the one or more conditions are met and a winning wireless device asset bid is related to each condition.

13. At least one processor configured to auction a wireless device-related asset:
a first module for receiving, from a plurality of media content providers, an asset acquisition request identifying at least one wireless device asset and at least one bidding constraint associated with each wireless device asset;
a second module for determining a biddable wireless device asset based on two or more asset acquisition requests identifying an equivalent wireless device asset and at least one match of a bidding constraint associated with the equivalent wireless device asset, wherein the biddable wireless device asset includes the equivalent wireless device asset and the matched bidding constraint;
a third module for receiving a bid for the biddable wireless device asset from at least one of the two or more media content providers;
a fourth module for determining a winning media content provider for the biddable wireless device asset based on a predetermined allocation routine applied to each bid; and
a fifth module for storing the biddable wireless device asset as an allocated wireless device asset associated with the winning media content provider for a predetermined period of time.

14. A computer program product, comprising:
a computer-readable medium comprising:
at least one instruction for causing a computer to receive, from a plurality of media content providers, an asset acquisition request identifying at least one wireless device asset and at least one bidding constraint associated with each wireless device asset;
at least one instruction for causing the computer to determine a biddable wireless device asset based on two or more asset acquisition requests identifying an equivalent wireless device asset and at least one match of a bidding constraint associated with the equivalent wireless device asset, wherein the biddable wireless device asset includes the equivalent wireless device asset and the matched bidding constraint;
at least one instruction for causing the computer to receive a bid for the biddable wireless device asset from at least one of the two or more media content providers;
at least one instruction for causing the computer to determine a winning media content provider for the biddable wireless device asset based on a predetermined allocation routine applied to each bid; and
at least one instruction for causing the computer to store the biddable wireless device asset as an allocated wireless device asset associated with the winning media content provider for a predetermined period of time.

15. An apparatus, comprising:
means for receiving, from a plurality of media content providers, an asset acquisition request identifying at least one wireless device asset and at least one bidding constraint associated with each wireless device asset;
means for determining a biddable wireless device asset based on two or more asset acquisition requests identifying an equivalent wireless device asset and at least one match of a bidding constraint associated with the equivalent wireless device asset, wherein the biddable wireless device asset includes the equivalent wireless device asset and the matched bidding constraint;
means for receiving a bid for the biddable wireless device asset from at least one of the two or more media content providers;
means for determining a winning media content provider for the biddable wireless device asset based on a predetermined allocation routine applied to each bid; and
means for storing the biddable wireless device asset as an allocated wireless device asset associated with the winning media content provider for a predetermined period of time.

16. A network device for auctioning wireless device assets, comprising:
a computer platform including at least one processor and a memory; and
an asset auction module stored in the memory and executable by the at least one processor, wherein the asset auction module includes:
an asset acquisition request receiver operable to receive, from a plurality of media content providers, an asset acquisition request identifying at least one wireless device asset and at least one bidding constraint associated with each wireless device asset,
a biddable asset determiner operable to determine a biddable wireless device asset based on two or more asset acquisition requests identifying an equivalent wireless device asset and at least one match of a bidding constraint associated with the equivalent wireless device asset, wherein the biddable wireless device asset includes the equivalent wireless device asset and the matched bidding constraint,
a bid receiver operable to receive a biddable wireless device asset bid from at least one of the two or more wireless device procurers,
an allocation routine operable to determine a winning media content provider for the biddable wireless device asset based on application of the routine to each bid, and
an allocation asset storage operable to store the biddable wireless device asset as an allocated wireless device asset associated with the winning media content provider for a predetermined period of time.

17. The network device of claim 16, further comprising a network platform module stored in the memory and executable by the processor, wherein the network platform module is operable to provide a platform for initiating the asset acquisition request and to bid on the biddable wireless device asset.

18. The network device of claim 16, wherein the asset acquisition request receiver is further operable to receive the asset acquisition request identifying at least one wireless device asset and at least one bidding constraint chosen from the group of bidding constraints consisting of wireless device location, time period, user profile information and user usage information.

19. The network device of claim 16, wherein the allocation routine is further operable to optimize each of the bids over a predetermined period of time to determine which bid is a winning asset bid.

20. The network device of claim 16, further comprising an asset auction feedback module stored in the memory and executable by the at least one processor, wherein the asset auction feedback module is operable to provide automated feedback related to an outcome of a bid process.

21. The network device of claim 20, wherein the asset auction feedback module is further operable to provide an actual success rate that is defined as the ratio between wireless device assets allocated to a media content provider and the wireless device assets attempted to be procured by the media content provider.

22. The network device of claim 20, wherein the asset auction feedback module is further operable to provide one or more simulated success rates that are defined as the ratio between wireless device assets potentially allocated to a media content provider versus the wireless device assets attempted to be procured based on one or more predefined potential bid amounts.

23. The network device of claim 16, further comprising a asset allocation option module stored in the memory and executable by the at least one processor, wherein the asset allocation option module is operable to provide an allocation option to a plurality of wireless devices to participate in an allocation of one or more of the wireless device assets.

24. The network device of claim 23, wherein the asset allocation option module is further operable to compensate for the allocation of a wireless device asset at a rate proportional to the one or more winning wireless device asset bids for the wireless device's allocated wireless device assets.

25. The network device of claim 23, wherein the asset allocation option module is further operable to provide the allocation option that allows for the identification of one or more conditions related to the allocation of the wireless device asset, wherein the one or more conditions is to be met to trigger allocation of the wireless device asset.

26. A method for providing an asset allocation option to a wireless device user, the method comprising:
providing an allocation option, to a plurality of wireless devices, to participate in the allocation of one or more wireless device assets, wherein the option allows for the identification of one or more conditions as a preface to the allocation of at least one of the wireless device assets;
receiving an acceptance of the allocation option including identification of at least one wireless device asset to be allocated;
storing the asset allocation option acceptance in memory; and
initiating compensation if the identified wireless device asset is allocated.

27. The method of claim 26, wherein providing an allocation option, to a plurality of wireless devices, to participate in the allocation of one or more wireless device assets, wherein the option allows for the identification of one or more conditions as a preface to the allocation of at least one of the wireless device assets further defines the one or more conditions as chosen from the group of conditions consisting of a type of content, a time period for allocation of a wireless device asset, and a location for allocation of a wireless device asset.

28. The method of claim 26, wherein receiving an acceptance of the allocation option including identification of at least one wireless device asset to be allocated further comprises receiving an acceptance of the allocation option including at least one condition associated with at least one identified wireless device asset as a preface to the allocation of the at least one identified wireless device asset.

29. The method of claim 26, wherein initiating compensation if the identified wireless device asset is allocated further comprises initiating compensation at a rate proportional to one or more winning wireless device asset bids for one or more of the allocated wireless assets.

30. The method of claim 26, wherein initiating compensation if the identified wireless device asset is allocated further comprises initiating compensation at a rate proportional to a quantity of conditions identified.

31. At least one processor configured to provide an asset allocation option to a wireless device, comprising:
a first module for providing an allocation option, to a plurality of wireless devices, to participate in the allocation of one or more wireless device assets, wherein the option allows for the identification of one or more conditions as a preface to the allocation of at least one of the wireless device assets;
a second module for receiving an acceptance of the allocation option including identification of at least one wireless device asset to be allocated;
a third module for storing the asset allocation option acceptance in memory; and
a fourth module for initiating compensation if the identified wireless device asset is allocated.

32. A computer program product, comprising:
a computer-readable medium comprising:
at least one instruction for causing a computer to provide an allocation option, to a plurality of wireless devices, to participate in the allocation of one or more wireless device assets, wherein the option allows for the identification of one or more conditions as a preface to the allocation of at least one of the wireless device assets;
at least one instruction for causing the computer to receive an acceptance of the allocation option including identification of at least one wireless device asset to be allocated;
at least one instruction for causing the computer to store the asset allocation option in memory; and
at least one instruction for causing the computer to initiate compensation if the identified wireless device asset is allocated.

33. An apparatus, comprising:
means for providing an allocation option, to a plurality of wireless devices, to participate in the allocation of one or more wireless device assets, wherein the option allows for the identification of one or more conditions as a preface to the allocation of at least one of the wireless device assets;
means for receiving an acceptance of the allocation option including identification of at least one wireless device asset to be allocated;
means for storing the asset allocation option acceptance in memory; and
means for initiating compensation if the identified wireless device asset is allocated.

34. A network device for providing an asset allocation option to a wireless device, comprising:
a computer platform including at least one processor and a memory; and
an asset allocation option module stored in the memory and executable by the at least one processor, the asset allocation option module including:
an allocation option provider operable to provide an option, to a plurality of wireless devices, to participate in the allocation of one or more wireless device assets, wherein the option allows for the identification of one or more conditions as a preface to the allocation of the wireless device assets,
an option acceptance receiver operable to receive acceptance of the option including identification of at least one wireless device asset to be allocated, and
a compensation initiator operable to initiate compensation if the identified wireless device asset is allocated.

35. The network device of claim 34, wherein the allocation option provider is further operable to provide an option, to a plurality of wireless devices, to participate in the allocation of one or more wireless device assets, wherein the option allows for the identification of one or more conditions chosen from the group of conditions consisting of a type of content, a time period for allocation of a wireless device asset, and a location for allocation of a wireless device asset.

36. The network device of claim 34, wherein the option acceptance receiver is further operable to receive acceptance of the option including at least one condition associated with at least one identified wireless device asset as a preface to the allocation of the at least one identified wireless device asset.

37. The network device of claim 34, wherein the compensation initiator is further operable to compensate at a rate proportional to one or more winning wireless device asset bids for the allocated wireless device assets.

38. The network device of claim 34, wherein the asset compensation module is further operable to compensate at a rate proportional to a quantity of conditions identified.

39. A system for auctioning wireless device assets and providing an asset allocation option to a wireless device, the system comprising:
at least one network device, comprising:
a computer platform including at least one processor and a memory;
an asset auction module stored in the memory and executable by the at least one processor, wherein the asset auction module includes:
an asset acquisition request receiver operable to receive, from a plurality of media content providers, an asset acquisition request identifying at least one wireless device asset and at least one bidding constraint associated with each wireless device asset,
a biddable asset determiner operable to determine a biddable wireless device asset based on two or more asset acquisition requests identifying an equivalent wireless device asset and at least one match of a bidding constraint associated with the equivalent wireless device asset, wherein the biddable wireless device asset includes the equivalent wireless device asset and the matched bidding constraint,
a bid receiver operable to receive a biddable wireless device asset bid from at least one of the two or more wireless device procurers,
an allocation routine operable to determine a winning media content provider for the biddable wireless device asset based on application of the routine to each bid, and
an allocation asset storage operable to store the biddable wireless device asset as an allocated wireless device asset associated with the winning media content provider for a predetermined period of time; and
an asset allocation option module stored in the memory and executable by the at least one processor, the asset allocation option module including:
an allocation option provider operable to provide an option, to a plurality of wireless devices, to participate in the allocation of one or more wireless device assets, wherein the option allows for the identification of one or more conditions as a preface to the allocation of the wireless device assets,
an option acceptance receiver operable to receive acceptance of the option including identification of at least one wireless device asset to be allocated,
an option acceptance storage operable to store the option acceptance for a predetermined period of time, and
a compensation initiator operable to initiate compensation if the identified wireless device asset is allocated.

40. The system of claim 39, wherein the at least one network device further comprises a network platform module stored in the memory and executable by the processor, wherein the network platform module is operable to provide the wireless device media content providers a network platform to initiate the asset acquisition request and a network platform to bid on the biddable wireless device asset.

41. The system of claim 39, wherein the asset acquisition request receiver is further operable to receive the asset acquisition request identifying at least one wireless device asset and at least one bidding constraint chosen from the group of bidding constraints consisting of wireless device location, time period, user profile information and user usage information.

42. The system of claim 39, wherein the one or more network devices further comprises an asset auction feedback module stored in the memory and executable by the at least one processor, wherein the asset auction feedback module is operable to provide automated feedback related to an outcome of the bid process.

43. The system of claim 39, wherein the compensation initiator is further operable to compensate at a rate proportional to the winning wireless device asset bid for the allocated wireless device assets.

44. The system of claim 39, wherein the option acceptance receiver is further operable to receive acceptance of the option including one or more conditions related to the allocation of the wireless device asset, wherein the one or more conditions is to be met to trigger allocation of the wireless device asset.

45. The system of claim 39, wherein the compensation initiator is further operable to initiate compensation at rate proportional to the quantity of conditions identified, if the one or more conditions are met and an optimal wireless device asset bid is related to each condition.
